# EUROPEAN PATENT SPECIFICATION

(11) **EP 3 129 991 B1**
(45) Date of publication and mention of the grant of the patent: **03.03.2021**
(21) Application number: 15726305.4
(22) Date of filing: 09.04.2015
(51) Int. Cl.: H01B 5/10, H02G 7/05

(54) **CONDUCTOR FOR BARE OVERHEAD ELECTRIC LINES, ESPECIALLY FOR MIDDLE-HIGH THERMAL LIMIT, AND LOW EXPANSION AT HIGH ELECTRONIC LOADS**
LEITER FÜR BLANKE STROMFREILEITUNGEN, INSBESONDERE FÜR MITTELHOHE WÄRMEGRENZE, UND GERINGE AUSDEHNUNG BEI HOHEN ELEKTRONISCHE LASTEN
CONDUCTEUR POUR LIGNES ÉLECTRIQUES AÉRIENNES NUES, EN PARTICULIER POUR LIMITE THERMIQUE MOYENNE-ÉLEVÉE, ET FAIBLE DILATATION À CHARGES ÉLECTRONIQUES ÉLEVÉES

(30) Priority: 09.04.2014 IT MI20140665
(43) Date of publication of application: 15.02.2017
(73) Proprietor: De Angeli Prodotti S.r.l., 35023 Bagnoli di Sopra (PD) (IT)
(72) Inventor: SARTI, Giacomo, I-35023 Bagnoli di Sopra (PD) (IT); PERONI, Davide, I-35042 Este (PD) (IT); MERZARI, Enrico, I-37036 San Martino Buon Albergo (VR) (IT); MIGLIARESI, Claudio, I-38050 Tenna (TN) (IT)
(74) Representative: Borsano, Corrado
(86) International application number: PCT/IB2015/052588
(87) International publication number: WO 2015/155728

(56) References cited:
- EP-A1- 2 410 534
- WO-A1-2012/142129
- KR-A- 20120 018 473
- KR-A- 20120 018 872
- US-A1- 2005 279 527
- US-A1- 2013 168 128

## Description

### Field of the invention

The present invention relates to a conductor for electric lines, in particular a conductor for bare overhead electric lines, particularly for high power, for medium-to-high thermal limit and limited expansion at high electric loads.

### Background art

Overhead electric power lines generally consist of aluminum conductors because of their good conductivity, low cost and low weight compared to other possible conductors suitable for power applications, such as copper, gold and silver. However, due to the poor mechanical properties of aluminum, conductors are normally reinforced internally with steel wires allowing installation thereof. Recent requirements have led to progressively increase the power to be transmitted over existing lines, e.g. by increasing the conductor cross-section. Therefore, it has become necessary to make the system lighter while preserving sufficient mechanical properties.

The choice of the type of electric line conductor is determined by the final conditions of operation of the conductor itself, in particular service life, mechanical stresses and environmental conditions. In fact, as widely documented in the literature, the most important environmental attacks that overhead conductors are subject to are prolonged expositions to temperature, humidity, UV-visible radiations and aggressive chemical agents, combined with constant application of mechanical stresses.

According to international standards, e.g. the Italian CEI 11-4 (1998-09) standard, "Execution of outdoor overhead electric lines", outdoor overhead electric lines are defined as "lines installed outdoors above ground, consisting of bare conductors with respective insulators, supports and accessories". This standard also requires that the admissible stresses of the conductor in EDS (Every Day Stress) conditions should not exceed 25% of its breaking load with settled conductor and 30% with unsettled conductor (i.e. during the tensioning phase). These conditions must be met throughout the conductor's service life, which is estimated to be longer than 40-50 years before the conductor needs be replaced.

The conductor must therefore preserve its characteristics of mechanical and fatigue strength over time, with limited creep elongation.

Among the electric conductors suitable for overhead transmission of electric power, aluminum conductors are the most widespread ones. Conductors for overhead transmission are generally classified into homogeneous conductors and non-homogeneous conductors. The former only contain aluminum alloys (AAAC), and are used both for electric current conduction and as support materials, while the latter contain a core of a reinforcement material, suitable for withstanding the weight of the conductor. Depending on the material used as a reinforcement, four categories can be identified, i.e. containing a steel core (known as ASCR, ACSS and GAP TYPE), containing a special metal alloy for conductor reinforcement (Fe-Ni alloy, INVAR), containing a metal composite (Al-Zr alloy with long alumina fibres, ACCR), and, finally, containing a polymeric matrix compound (known as ACCC: inner layer of carbon fibres and outer layer of glass fibers in epoxy resin).

The power required from electric lines is constantly increasing; therefore, new systems have been developed in order to overcome the excessive demand problem, as well as to reduce electric cable losses. Because of excessive temperatures, it is very important to try to limit the sinking of electric lines and to increase their current capacity. The solutions that were first developed required using an internal support consisting of steel wires (ACSR), which were afterwards further improved for increased efficiency at high temperatures, pretensioning of internal wires (GAP-TYPE), or using annealed aluminum wires having a trapezoidal shape (ACSS/TW). This alternative provides better mechanical properties due to the steel reinforcement, but it suffers from the problem of an excessive linear expansion coefficient, which does not eliminate the line sinking problem.

It has also been found that conductors of the above-described type have a relatively low "transported electric power - weight per meter" ratio; the cause is to be attributed to steel, which considerably increases the weight without effectively contributing to transporting electric energy; the consequence is that the cross-section actually transporting electric energy is just that of the aluminum wires.

Product evolution has been guided by the necessity of increasingly having the reinforcement core support the weight of the conductor, so as to be able to use as a conductor annealed aluminum alloys with just a few alloy elements, resulting in less electric load losses than when using stronger equivalents work-hardened or hardened by thermal treatment and precipitation. The ever-growing tendency towards increased power to be transported by conductors, and hence higher temperatures, has made it necessary to use materials other than the classical steel, which is subject to excessive elongation phenomena. It has thus been thought of replacing the steel core with materials having similar mechanical properties but a lower thermal expansion coefficient (as is the case of the INVAR alloy used for high-temperature applications) and a lower specific weight (like light aluminum alloys reinforced with alumina fibres or polymeric matrix compounds).

During its entire service life, the conductor will be subject to potentially severe environmental conditions in terms of temperature, humidity and chemical aggression. When conductors are to be placed in the vicinity of densely industrial areas or outskirts of great urban centres or regions close to the sea or anyway exposed to marine winds, there may be high concentrations of salts, nitrogen oxides, sulfur dioxide and atmospheric particulate (acidity due to the presence of SO₄⁻⁻ , NO₃⁻ ions, deposition of SO₂, deposition of HNO₃). The presence of such chemical agents, combined with the effect of temperature and humidity, may jeopardize the service life and the performance of the materials used as a reinforcement.

Although conductors are beginning to appear on the market which include a load-bearing element made of composite material, prevalently consisting of carbon fibres and epoxy resin, such a solution however has two drawbacks: one related to the high cost of the material, and the other one related to the problem of galvanic corrosion between aluminum and carbon.

WO2012/142129-A1 describes an electric cable with an external insulating coating, and containing a cable core and a plurality of conductive elements surrounding the cable core. The cable core is made of composite material.

As known, there is a substantial difference between an electric *cable* and an electric *conductor.* A "*cable*" refers to a means for electric energy transmission equipped with an external insulating coating. A "*conductor*" refers to a means for electric energy transmission, the application and operation of which do not require it to be externally insulated.

Above a certain operating voltage value, the layer of material necessary for ensuring proper cable insulation would have to become so thick as to make the cable difficult to install. Therefore, the cable described in WO2012/142129-A1 is not suitable for use within the scope of the present invention, which concerns a "bare" overhead conductor, i.e. without external insulation.

Composite materials, such as those mentioned in WO2012/142129-A1, are obtained by combining materials of different classes to obtain new or improved properties, compared to those of the original materials. A composite is therefore a heterogeneous material made up of distinct phases, which can be separated from each other. In its simplest version, it consists of a discontinuous phase (reinforcement) scattered into a continuous phase (matrix). The task of the matrix is to protect and support the reinforcement, holding it in its original position, and to evenly transfer thereto any external stresses. The reinforcement can thus express its physical and mechanical properties, thereby improving the characteristics of the matrix. For this synergic effect between matrix and support to adequately develop, it is necessary that good contact is established there between through a process of impregnating the reinforcement with the matrix, and that such contact is maintained even in the presence of high external mechanical stresses; this latter requirement can be expressed as good adhesion between phases.

Conductors with a composite core, as in WO2012/142129-A1, are provided with a reinforcement of carbon fibre and a matrix of epoxy resin (ACCC). However, the matrix implies some constraints in terms of flexibility, thermal expansion, operating temperature, and an increase in the weight of the conductor, so that these cables are not suitable for use within the frame of the present invention.

KR2012-0018473-A describes an electric conductor with an aramidic reinforcement, the sheath of which only performs the function of preventing water and moisture from damaging the fibres of the aramidic reinforcement. The problem left unsolved by this patent is preventing UV rays from hitting the aramidic fibres, which, as known, undergo significant degradation when exposed to such radiations.

KR2012-0018872-A describes an electric conductor with a multi-wire core, wherein every single wire of said core is coated with an aluminum tube, the thickness of which is between 0.05 and 0.25 mm. Such a thin tube can be easily damaged during the subsequent processing steps and during conductor installation. On the other hand, if a thicker tube were employed in order to overcome this problem, this would imply a higher strain due to the thermal expansion of the tube, which, if compared with the negative thermal expansion coefficient of aramidic fibres, would imply an extra length of the tube with respect to the fibres, which would not be negligible at all, if we consider that normal conductor lengths range from a few hundreds of metres to some kilometers, thus worsening the thermal expansion characteristics of the whole conductor. Moreover, a metallic coating would offer poor resistance to the mechanical phenomenon of fatigue, as well as low elasticity.

### Summary of the invention

The present invention, therefore, aims at providing a conductor for bare overhead electric lines which overcomes the above-mentioned drawbacks, and which has the required physical-mechanical characteristics.

It is one object of the invention to provide a conductor for bare overhead electric lines which can transport high electric power, in particular compared to traditional conductors of the same size (i.e. outside diameter) and the same total mass.

The invention further aims at providing a conductor for bare overhead electric lines which has adequate physical and mechanical characteristics, having properties such as:
- adequate rigidity, thus not undergoing excessive deformation during installation and in operation, and not requiring excessive pretensioning;
- good breaking strength, so as to be able to withstand the initial pretensioning and to support the conductor weight throughout its life;
- good thermal resistance, both static and dynamic, so as to be able to withstand the thermal cycles caused by electric losses;
- very good creep resistance, resulting in reduced elongation in operation, which shall be less than 1% throughout the conductor's life;
- low thermal expansion coefficient, for limiting the elongation of the cable should the operating temperature rise;
- good fatigue strength, because of oscillations caused by the wind. This is particularly important if the geometry of the cross-section has not been specially designed for this purpose.

The basic idea of the present invention is to provide the conductor for electric lines with a load-bearing core comprising aramidic fibres, as a solution to the above-mentioned problems, which have been known for a long time but have not yet been effectively solved

According to the invention, an electric conductor configured for bare overhead electric lines is provided as defined in claim 1. Further developments of the invention are the subject of the dependent claims.

As set out in claim 1, the present invention relates to a conductor for bare overhead electric lines, which comprises a load-bearing core on which conducting means for electric energy transportation are arranged, characterized in that said load-bearing core comprises a plurality of aligned aramidic fibres defining one or more ropes wrapped in one or more sheaths.

Preferably, the aramidic fibres are made of Kevlar® or Twaron® or Zylon®.

Preferably, the sheaths are made of thermoplastic material.

The present invention solves the problems suffered by prior-art solutions of electric conductors in terms of flexibility, thermal expansion, operating temperature, while not increasing the conductor's weight. In addition, the aramidic fibres of the conductor of the present invention, since they do not suffer from fragility, is used without requiring a support matrix, thereby eliminating the constraints that conductors fitted with a reinforcement of composite material are subject to.

The present invention further solves the problems suffered by prior-art solutions in that it prevents UV rays from hitting the aramidic fibres, which would otherwise undergo significant degradation, if exposed to such radiations.

The present invention further solves the problems suffered by prior-art solutions as concerns the strains caused by different thermal expansions among the various material layers in use.

The present invention also relates to a coupling terminal for coupling a terminal part of the conductor for electric lines to an electric line pylon.

It is a particular object of the present invention to provide a conductor for bare overhead electric lines, particularly for high power, for medium-to-high thermal limit and limited expansion at high electric loads, as better set out in the claims which are also an integral part of the present description.

### Brief description of the drawings

Further features and advantages of the invention will become more apparent in the light of the description of a preferred but non-limiting embodiment of the conductor according to the invention, provided herein by way of non-limiting example with reference to the annexed drawings, wherein:
- Figures 1a and 1b show two variants of the cross-section of a conductor according to the present invention;
- Figure 2 shows a table indicating the chemical resistance of some fibrous and metallic materials and of Kevlar®;
- Figure 3 shows comparative stress-strain graphs for composites based on carbon fibres, glass fibres, aluminum, and aramidic fibres;
- Figures 4.1 - 4.4 show some comparative tables concerning the chemical resistance properties of Kevlar® compared to substances such as acids (Fig. 4.1), bases (fig. 4.2), saline solutions and other substances (Fig. 4.3), organic solvents (Fig. 4.4);
- Figure 5 shows an example of a coupling terminal for the conductor with a load-bearing core made from aramidic fibres;

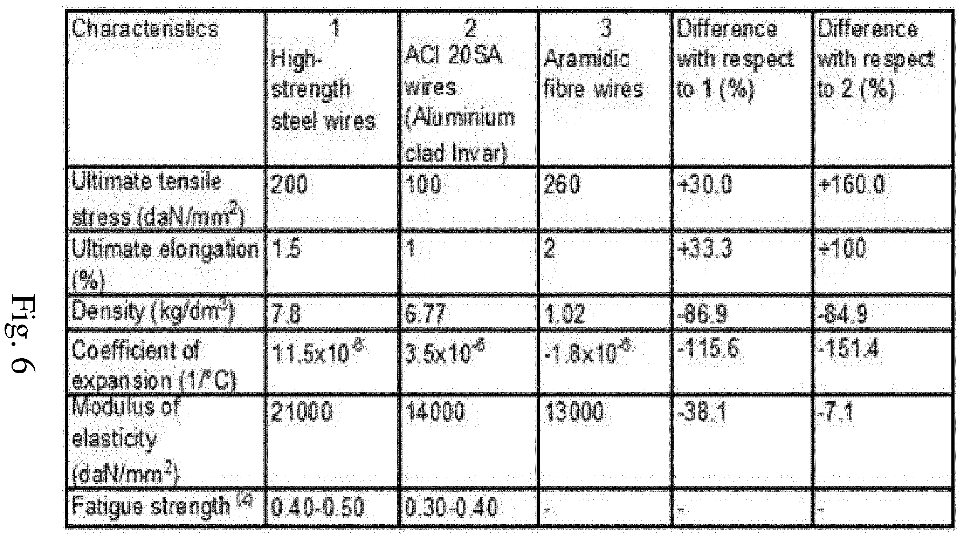

- Figure 6 shows a comparative table concerning some properties of: wires of high-tensile steel, wires of ACI 20SA (Aluminum Clad Invar) and aramidic fibres.

In the drawings, the same reference numerals and letters identify the same items or components.

### Detailed description of some embodiments of the invention

The conductor for bare overhead electric lines according to the invention is characterized in that it adopts a fibrous reinforcement of aramidic nature, particularly for operating ranges up to 120°C and peaks up to 150°C.

By way of non-limiting example, Kevlar® aramidic fibres will be taken into account herein.

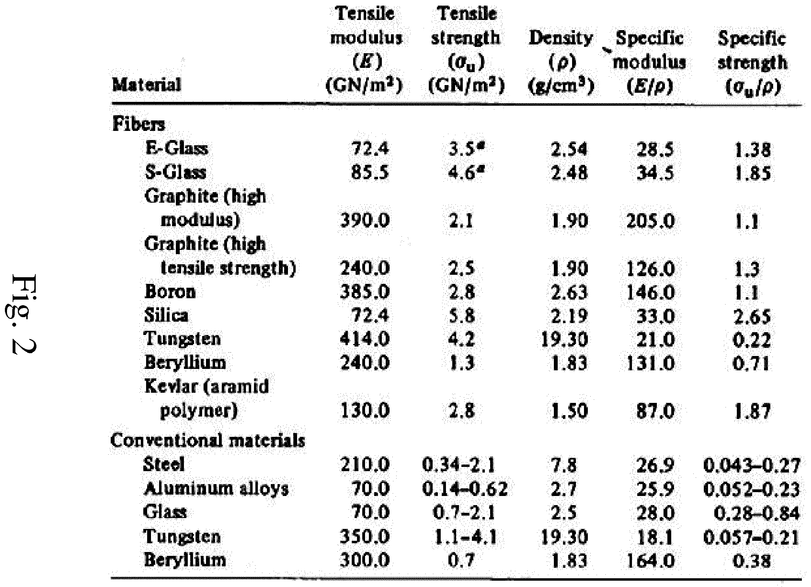

As can be understood from the table shown in Figure 2, compared to other materials that can be used for reinforcing conductors for overhead electric lines, Kevlar® fibres have a high specific breaking modulus (higher by 70% than that of carbon) and a high specific modulus of elasticity (more than three times that of steel). Compared to steel, which is a typical reinforcement material, Kevlar® fibres are five times lighter and have a higher breaking load by more than 30%, and this determines a specific breaking modulus which is about seven times higher. When compared to the best aluminum alloys, also used as reinforcements for overhead conductors, aramidic fibres have an elastic modulus and a breaking load respectively higher by 86% and 450%, which, combined with their densities, provide a specific elastic modulus more than three times higher and a specific breaking modulus twice as high.

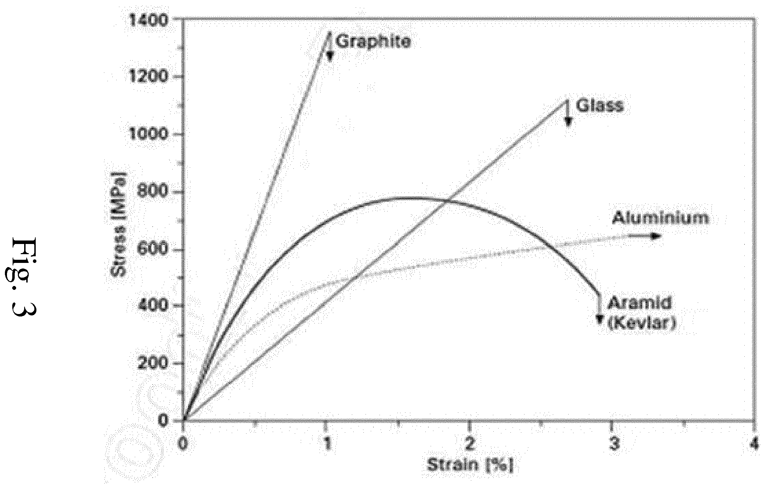

As it can be seen in Figure 3, which shows comparative stress-strain graphs for composites based on carbon fibres, glass, aluminum and aramidic fibres, aramidic fibres (such as Kevlar®, by way of non-limiting example) absorb much energy before breaking, compared to the other known materials used for reinforcing conductors for overhead electric lines, thus de facto making for a ductile reinforcement. If on the one hand graphite-based reinforcements have high elastic modulus and breaking load, on the other hand the fragile tensile behaviour requires much attention to be paid during both the storage and processing stages. The behaviour of aramidic reinforcements, on the contrary, is similar to that of metals in terms of breaking modalities, which ensures much ease of handling during processing.

Considering the behaviour of aramidic fibres under the action of a constant load (creep), it has been found that at 10% of the breaking load aramidic yarns do not suffer from humidity and maintain a very limited creep velocity, even at temperatures around 120°C.

Considering the reinforcement phases, carbon fibres may induce galvanic corrosion with aluminum, although they do not undergo any degradation, except for oxidation, at high temperatures beyond 600°C.

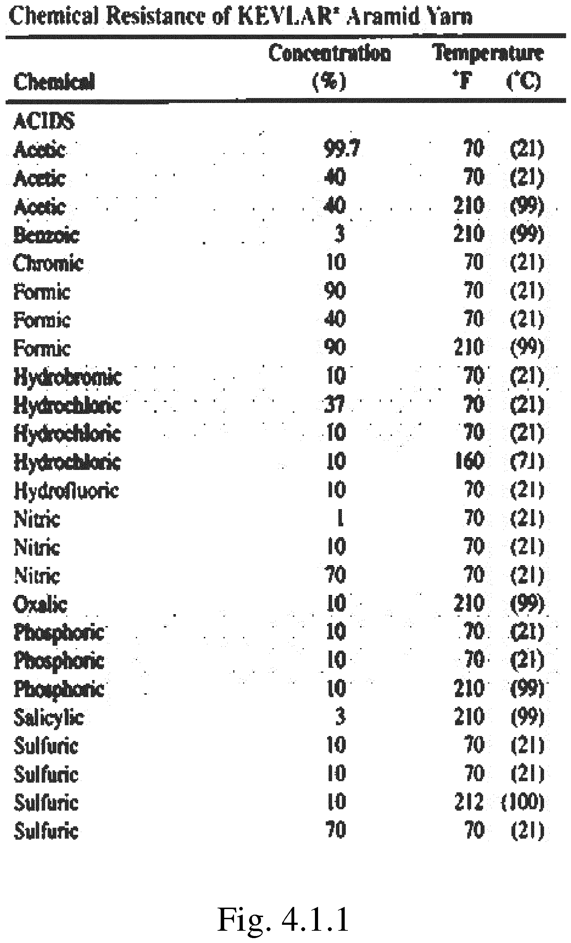

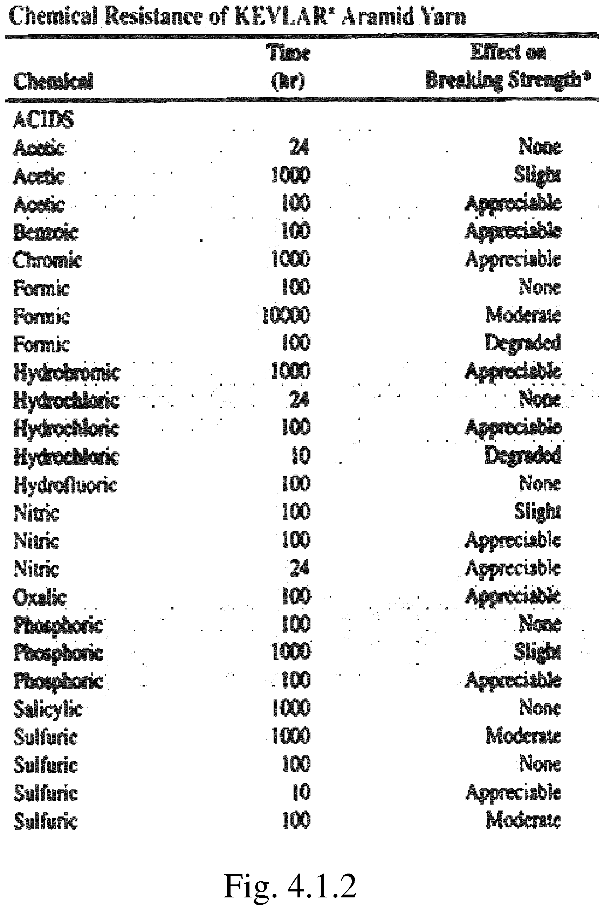

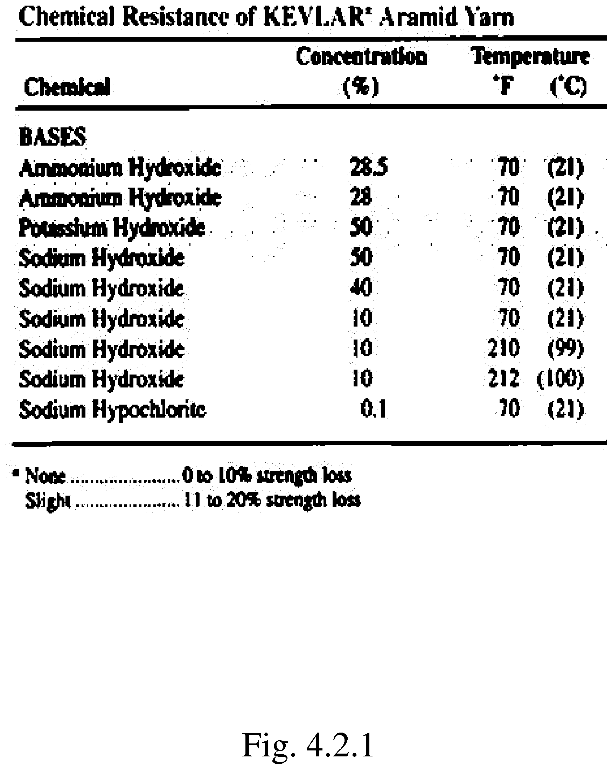

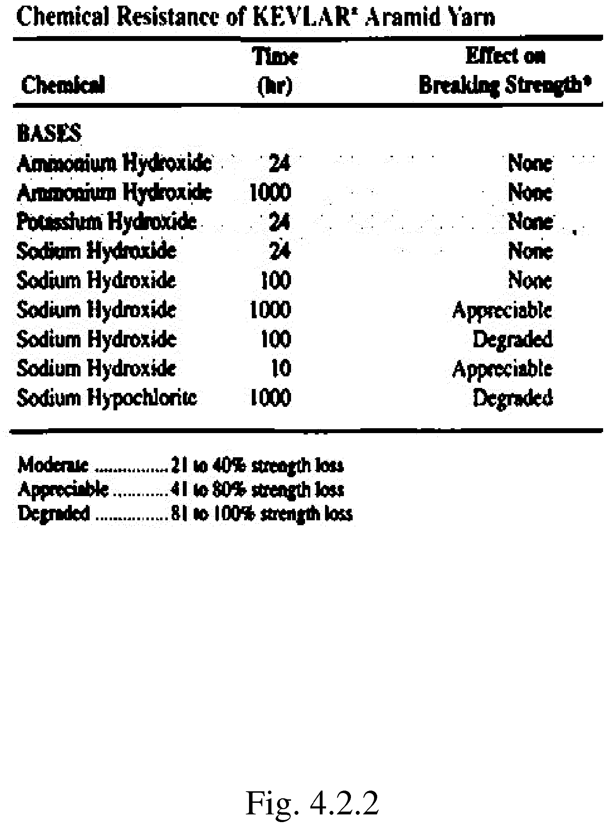

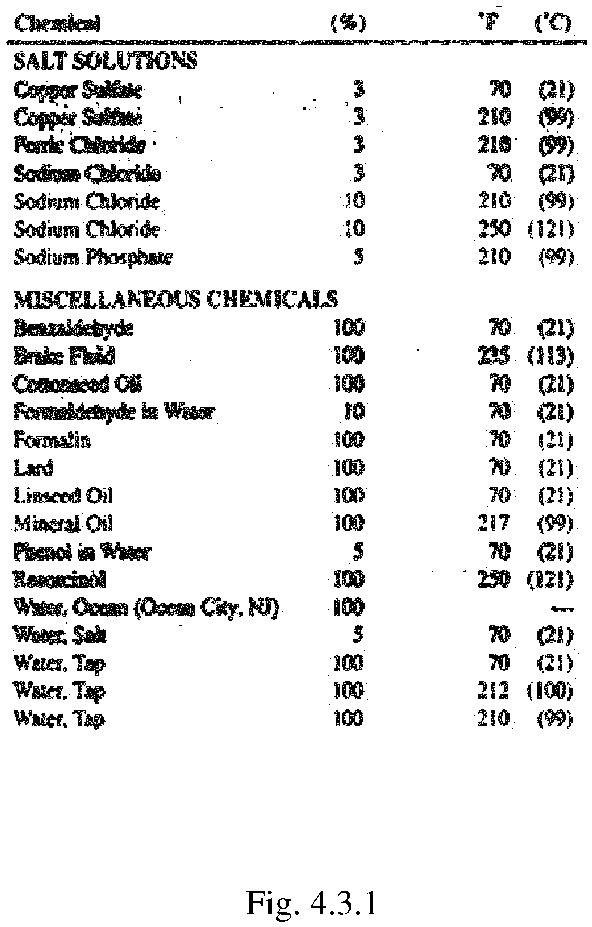

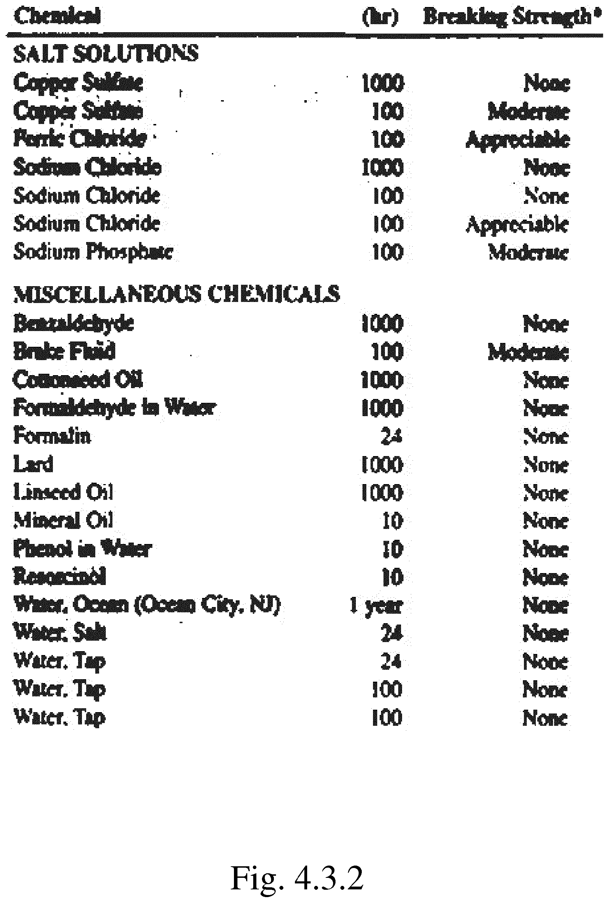

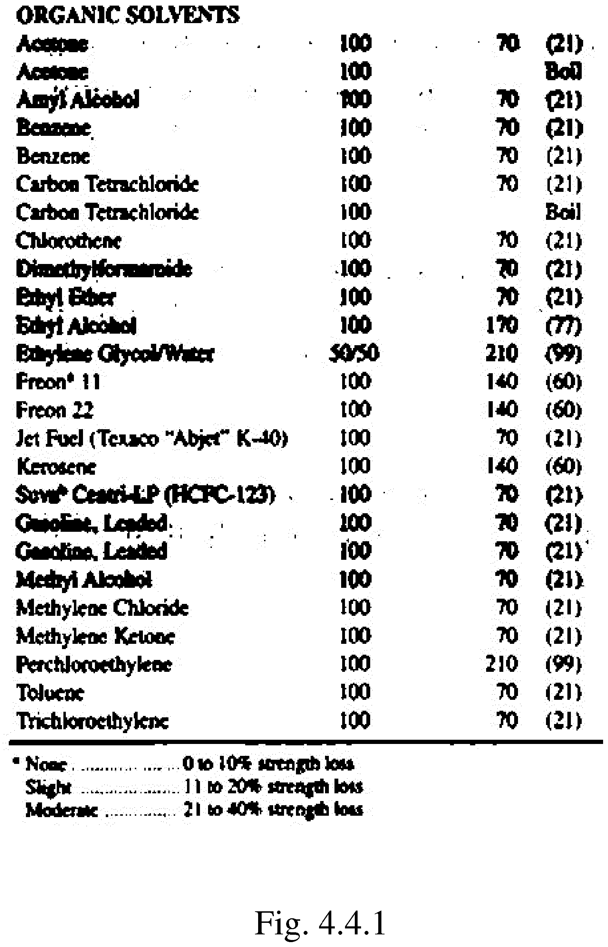

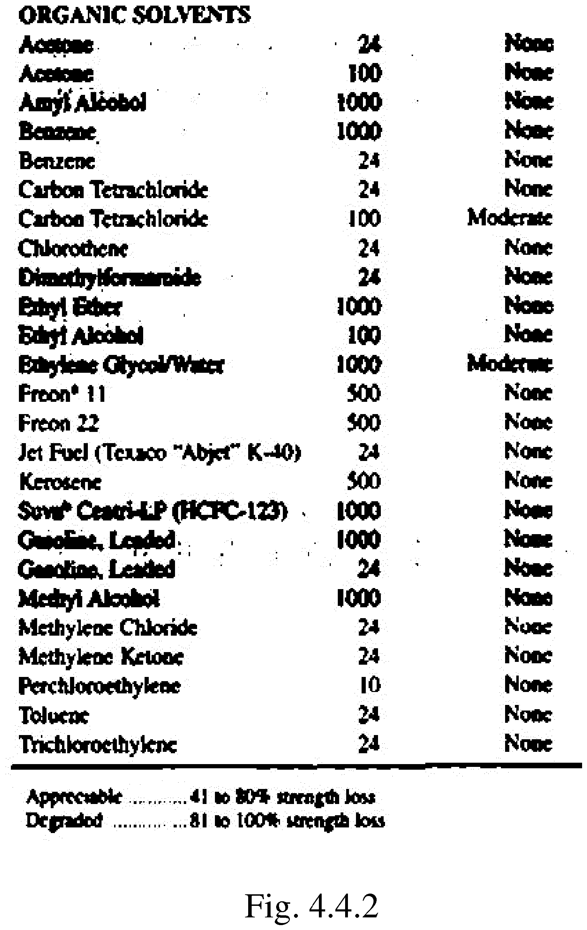

As listed in Figures 4.1 and 4.2, aramidic fibres do not suffer from exposition to chemicals, with which it is likely that a conductor will come in contact in the course of its life. It must be pointed out that they do not suffer from exposition to organic solvents (e.g. acetone and kerosene) and seawater. In particular, it can be seen that aramidic fibres do not suffer from contact with sulfuric acid at a concentration of 10% for 100 hours, and with sodium chloride at a concentration of 10% for 100 hours at 99°C.

Though it is known that aramidic fibres do not suffer from adverse environments in terms of temperature, humidity and corrosion, considering a service life of about 40 years, it is to employ a protective sheath to be wrapped around the aramidic fibrous reinforcement.

In the long run, in fact, problems may arise as concerns susceptibility to UV radiations (which is typical of polymeric materials containing benzene rings), to exposition to strong acids and bases (acetic and benzoic acids at 100°C, hydrochloric acid, nitric acid, hydrobromic acid, phosphoric acid, sulfuric acid, caustic soda and bleach) and to some concentrated salts (copper sulfate, sodium phosphate and ferric chloride at 100°C, and sodium chloride above 120°C).

Even if aramidic yarns are notoriously very resistant to shear and fatigue, their long service life and the dynamic loads, thermal loads and relative friction they are subjected to, may also damage the aramidic fibrous reinforcement yarn over time, fibre by fibre, unless adequately protected.

Consequently, the sheath performs the function of protecting the aramidic fibrous reinforcement yarn both chemically, against locally accumulated concentrations of solvents/acids/bases/salts coming from the atmosphere, and physically, by insulating the aramidic fibres from contact with the upper layers of the conductor. The sheath will also be useful as an element for keeping the yarns confined and compact, and for protecting the aramidic fibres against exposition to UV radiations.

It will be considered herein the use of a sheath made of elastomeric polymeric material, such as, by way of non-limiting example, Hytrel® (thermoplastic elastomer polyester) or TPU (thermoplastic polyurethane), resistant to temperatures up to 150°C. When properly blended with additives, pigments and stabilizers, such as, by way of non-limiting example, hindered amine light stabilizers (HALS), it can resist the environmental aggression caused by ultraviolet radiations, humidity, organic solvents, polar solvents and diluted acidic and basic solutions.

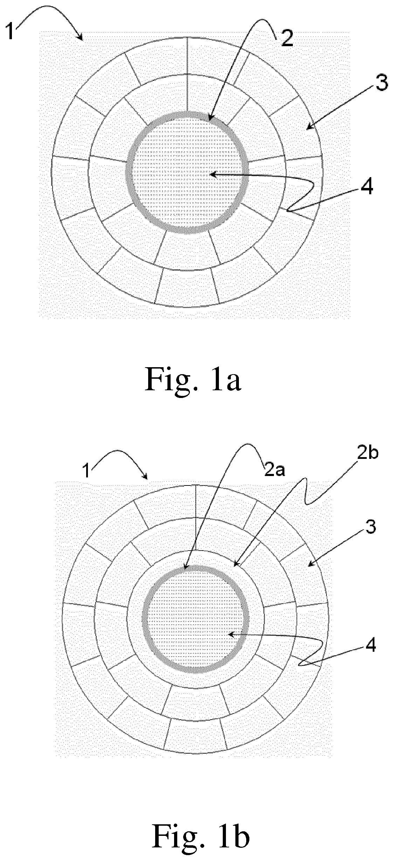

With reference to Figures 1a, 1b, there is shown a conductor for electric lines, designated as a whole by reference numeral 1.

The conductor 1 comprises a load-bearing core 2-4, on which conductors 3 for electric energy transportation are arranged.

The core 2-4 is made out of one or more ropes 4 of wires of aramidic fibres wrapped in a thermoplastic sheath.

Preferably, the aramidic fibres have a diameter between 1 and 100 microns.

Preferably, the core has a diameter between 1 and 100 millimetres.

The aramidic fibres are assembled by means of a containment sheath capable of withstanding high temperatures for a time compatible with the life of a common conductor with a steel load-bearing element.

The thermoplastic sheath 2 that surrounds the rope 4 is applied by high-pressure plastic extrusion.

The thermoplastic sheath 2 is extruded on the rope 4 of aramidic fibres for containing them and also for preventing them from being damaged by UV solar rays, as previously described. Said sheath, which is made of, by way of non-limiting example, Hytrel® or TPU, is resistant to temperature peaks of 150°C and can work for up to 40 years at operating temperatures of 120°C.

Moreover, the conductor 1 comprises a plurality of conducting wires 3 laid (wound in a spiral pattern) over the core 2-4, so as to define a circular crown around the core 2-4.

In other examples, however, there may be more than one circular crown of conducting wires 3, arranged concentrically one over the other; advantageously, the overlapped circular crowns of conducting wires 3 may be as many as five.

The conducting wires 3 have a circular cross-section or may be shaped like a circular crown sector; as an alternative, they may have any other cross-section compatible with the application of the conductor 1 within the frame of electric energy transmission.

The conducting wires 3 are made of annealed aluminum with a purity higher than 99.5% or Al-Mg-Si or Al-Mn or Al-Zr alloys or other aluminum alloys for electric use.

In a preferred but non-limiting embodiment, the aramidic fibres are made of Kevlar® or Twaron® or Zylon®, the sheath 2a of the core 2 is made of Hytrel® or TPU thermoplastic elastomer polyester, and the conducting skirt is formed by conducting wires 3 made of Al-Zr alloy.

The operation of the conductor 1 according to the invention is apparent in the light of the above description and of the annexed drawings, being substantially as follows.

When the conductor 1 is installed, the core 2-4 (comprising the rope 4 of aramidic fibres and the sheath 2) supports the conductor 1, while the conducting wires or 3 are particularly dedicated to energy transportation.

When in operation, after span installation, the temperature of the conductor rises and, beyond a certain predetermined value (stress transition point or knee-point), detachment will occur between the core (comprising the rope 4 and the sheath 2) and the crowns of conducting wires 3, due to their different thermal expansion.

Then, as temperature increases further, the conductor 1 will expand according to the expansion coefficient of the core (which is extremely small), and not according to the average expansion coefficient of the conductor 1 as a whole (including the conducting wires 3, which is much higher because of the higher percentage of aluminum or alloys thereof).

This will cause the span deflections to remain compatible with the safety regulations notwithstanding the high temperatures (>100°C).

It is clear from the above description that the electric conductor of the present invention is suitable for applications at operating temperatures above 90°C, and with a thermal expansion coefficient lower than 18 ^{∗} 10⁻⁶ /°C.

The conductor thus conceived for installation on current electric lines as a replacement for current conductors requires suitable terminal couplings. The optimal solutions is a configuration based on the friction developed on a conical insert.

The load is distributed evenly over the fibres thanks to the cone that presses against just one layer of fibres on the respective insert. Once in traction, the fibres will drag the cone by friction, thereby tightening the fibres by compression.

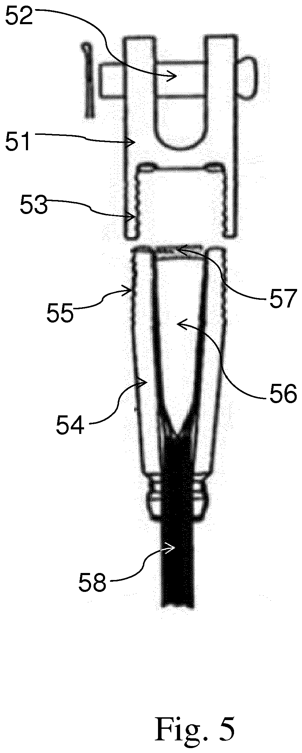

Figure 5 shows an example of embodiment of a coupling terminal adapted to couple the terminal part of the electric conductor to the electric line pylon.

The coupling terminal essentially comprises the following elements:
- an end cap 51, comprising on one side a pin 52 to be coupled to the pylon, and on the other side a threaded opening 53;
- a hollow termination body 54 with a truncated-cone shape, having on its bigger side a thread 55 adapted to be screwed into the threaded opening 53;
- a tightening cone 56 adapted to be inserted into the hollow termination body 54, so as to tighten said plurality of aramidic fibres of the terminal part of the conductor into the hollow termination body 54;
- preferably, there is also a gasket 57 that seals the hollow termination body.

First of all, after removing the first part of the external gasket for a length equal to that of the tightening cone 56, the rope 58 will have to be inserted into the hollow termination body 54, preferably made of aluminum alloy (or steel). Then all the fibres released by the gasket will have to be arranged properly: in fact, the yarn will have to be open relative to the centre, and the fibres will have to be properly separated from one another and evenly distributed in just one layer. Finally, the cone 56 will have to be inserted with its tip towards the central part of the rope, so that the fibres will arrange themselves on its oblique surface.

The last operation prior to closing the terminal will be positioning the wedge 56 into its seat, by pushing the cone towards the inside of the terminal 54 with the help of a tool or a small hammer. Before use, some traction will have to be applied for two main reasons. The first reason is that the wedge-fibres connection must be made stable in order to avoid causing any undesired elongation in operation, due to settling. The second reason is that any possible misalignment of the fibres within the rope, caused by the curvature taken during storage as a coil, must be eliminated.

In order to ensure good insulation against humidity entering the rope by capillarity, flexible gaskets 57 can be used on the terminal, such as silicone-based sealants or vulcanized tape. The advantages deriving from the application of the present invention are apparent. Compared to classical conductors with a steel load-bearing element, aramidic fibres allow creating conductors that can, due to their lightness and high breaking load, work at operating temperatures above 100°C with the same deflection.

The conductor allows for increased conductivity by approx. 20% over equivalent traditional conductors with a steel load-bearing rope; in practice, the conductors according to the present invention allow creating overhead lines that, the conductors' mass and size being equal, allow transporting 50-70% more electric power in relation to their operating temperature.

The wire of aramidic fibres can be used in conductors with medium-to-high thermal limit and reduced expansion at high electric loads as a replacement for ACI (Aluminum Clad Invar) wires, resulting in a considerable mass reduction, so that the difference can be utilized for increasing the mass of conducting material (aluminum or alloys thereof) without increasing the total mass of the conductor.

Thanks to the expansion coefficient close to zero of aramidic fibres, conductors for high thermal limit can be produced, with a deflection at 120°C equal to or lower than that of wires with a steel or Invar (Fe-Ni alloy) load-bearing element, thus eliminating the problems related to pylon overload and span deflection.

The above-described example of embodiment may be subject to variations without departing from the protection scope of the present invention, including all equivalent designs known to a man skilled in the art.

The elements and features shown in the various preferred embodiments may be combined together without however departing from the protection scope of the present invention as defined by the appended claims.

From the above description, those skilled in the art will be able to produce the object of the invention without introducing any further construction details.

## Claims

1. Electric conductor (1) configured for bare overhead electric lines, comprising a load-bearing core (2-4) on which conducting means for electric energy transportation are arranged, **characterized in that** said load-bearing core (2-4) comprises a plurality of aligned aramidic fibres without a support matrix defining one or more ropes (4) wrapped in one or more extruded sheaths (2) of thermoplastic material, and said electric conductor (1) has operating temperatures above 90°C, and a thermal expansion coefficient lower than 18 ^{∗} 10⁻⁶ /°C.

2. Conductor according to claim 1, **characterized in that** said aramidic fibres are made of Kevlar® or Twaron® or Zylon®.

3. Conductor according to claim 1, **characterized in that** said aramidic fibres have a diameter in the range of 1 to 100 microns.

4. Conductor according to claim 1, **characterized in that** said core (2-4) has a diameter in the range of 1 to 100 millimetres.

5. Conductor according to claim 1, **characterized in that** said thermoplastic material is an elastomeric polymeric material.

6. Conductor according to claim 5, **characterized in that** said elastomeric polymeric material is Hytrel® or TPU, thermoplastic polyurethane, blended with additives, pigments and stabilizers.

7. Conductor according to claim 6, **characterized in that** said stabilizers are hindered amine light stabilizers (HALS).

8. Conductor according to claim 1, **characterized in that** the conducting means comprise a plurality of circular or profiled conducting wires (3) arranged over the core (2-4), said conducting wires (3) defining at least one circular crown on said core (2-4).

## Patentansprüche

1. Elektrischer Leiter, der für elektrische Oberleitungen konzipiert ist und einen lasttragenden Kern umfasst, auf dem leitende Elemente für den Transport elektrischer Energie angeordnet sind, wobei der tragende Kern eine Vielzahl von ausgerichteten Aramidfasern ohne Stützmatrix umfasst, die ein oder mehrere Seile definieren, die in einen oder mehrere Lagen aus thermoplastischem Material gewickelt sind, und wobei der Leiter für Anwendungen bei Betriebstemperaturen über 90° C und einem Wärmeausdehnungskoeffizienten von weniger als 18^{∗}10-6/°C geeignet ist.

2. Elektrischer Leiter nach Anspruch 1, **dadurch gekennzeichnet, dass** die aramidischen Fasern aus Kevlar® oder Twaron® oder Zylon® hergestellt sind.

3. Elektrischer Leiter nach Anspruch 1, **dadurch gekennzeichnet, dass** die aramidischen Fasern einen Durchmesser im Bereich von 1 bis 100 Mikron haben.

4. Elektrischer Leiter nach Anspruch 1, **dadurch gekennzeichnet, dass** der Kern einen Durchmesser im Bereich von 1 bis 100 Millimetern aufweist.

5. Elektrischer Leiter nach Anspruch 1, **dadurch gekennzeichnet, dass** das thermoplastische Material ein elastomeres Polymermaterial ist.

6. Elektrischer Leiter nach Anspruch 5, **dadurch gekennzeichnet, dass** das elastomere Polymermaterial Hytrel® oder TPU, also ein thermoplastische Polyurethan, gemischt mit Additiven, Pigmenten und Stabilisatoren ist.

7. Elektrischer Leiter nach Anspruch 6, **dadurch gekennzeichnet, dass** die Stabilisatoren gehinderte Aminlichtstabilisatoren (HALS) sind.

8. Elektrischer Leiter nach Anspruch 1, **dadurch gekennzeichnet, dass** die leitenden Elemente eine Vielzahl von runden oder profilierten leitenden Drähten sind, die über dem Kern angeordnet sind, wobei die leitenden Drähte mindestens eine kreisförmige Krone auf dem Kern bilden.

## Revendications

1. Conducteur électrique (1) configuré pour des lignes électriques aériennes nues, comprenant une âme supportant la charge (2-4) autour de laquelle sont disposés des éléments conducteurs pour le transport d'énergie électrique, **caractérisé en ce que** ladite âme supportrice (2-4) comprend une pluralité de fibres aramides alignées sans matrice de support définissant une ou plusieurs éléments (4) enveloppées dans une ou plusieurs gaines extrudées (2) de matière thermoplastique, et ledit conducteur électrique (1) a une température de fonctionnement supérieure à 90 ° C et une dilatation thermique coefficient inférieur à 18 ^{∗} 10⁻⁶ / ° C.

2. Conducteur selon le commentaire ou revendication 1, **caractérisé en ce que** lesdites fibres aramides sont en Kevlar® ou Twaron® ou Zylon®.

3. Conducteur selon le commentaire ou revendication 1, **caractérisé en ce que** lesdites fibres aramides ont un diamètre compris entre 1 et 100 microns.

4. Conducteur selon le commentaire ou revendication 1, **caractérisé en ce que** ledit noyau (2-4) a un diamètre compris entre 1 et 100 millimètres.

5. Conducteur selon le commentaire ou revendication 1, **caractérisé en ce que** ledit matériau thermoplastique est un matériau polymère élastomère.

6. Conducteur selon le commentaire ou revendication 5, **caractérisé en ce que** ledit matériau polymère élastomère est Hytrel® ou TPU, polyuréthane thermoplastique, mélangé à des additifs, des pigments et des stabilisants.

7. Conducteur selon le commentaire ou revendication 6, **caractérisé en ce que** lesdits stabilisants sont des photostabilisants de type aminé à encombrement stérique (HALS).

8. Conducteur selon le commentaire ou revendication 1, **caractérisé en ce que** les éléments conducteurs comprennent une pluralité de fils conducteurs circulaires ou profilés (3) disposés autour de l'âme (2-4), lesdits fils conducteurs (3) définissant au moins une couronne circulaire sur ladite âme (2-4).
